(19) Europäisches Patentamt
European Patent Office
Office européen des brevets

(11) **EP 2 992 298 B1**

(12) **FASCICULE DE BREVET EUROPEEN**

(45) Date de publication et mention de la délivrance du brevet:
**18.03.2020 Bulletin 2020/12**

(21) Numéro de dépôt: **14723387.8**

(22) Date de dépôt: **29.04.2014**

(51) Int Cl.:
**G01C 19/5747** *(2012.01)*

(86) Numéro de dépôt international:
**PCT/EP2014/058687**

(87) Numéro de publication internationale:
**WO 2014/177542 (06.11.2014 Gazette 2014/45)**

(54) **CAPTEUR ANGULAIRE INERTIEL DE TYPE MEMS ÉQUILIBRÉ ET PROCÉDÉ D'ÉQUILIBRAGE D'UN TEL CAPTEUR**

MEMS-AUSGEGLICHENER INERTER WINKELSENSOR UND VERFAHREN ZUM AUSGLEICHEN SOLCH EINES SENSORS

MEMS BALANCED INERTIAL ANGULAR SENSOR AND METHOD FOR BALANCING SUCH A SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2013 FR 1353926**

(43) Date de publication de la demande:
**09.03.2016 Bulletin 2016/10**

(73) Titulaire: **Safran Electronics & Defense
92100 Boulogne-Billancourt (FR)**

(72) Inventeurs:
• **JEANROY, Alain**
  **92100 Boulogne-Billancourt (FR)**
• **ONFROY, Philippe**
  **92100 Boulogne-Billancourt (FR)**

(74) Mandataire: **Lavialle, Bruno François Stéphane et al
Cabinet Boettcher
16, rue Médéric
75017 Paris (FR)**

(56) Documents cités:
**US-A1- 2004 123 661    US-A1- 2011 094 302**

**Description**

La présente invention concerne un capteur angulaire inertiel vibrant tel qu'un gyromètre ou un gyroscope et un procédé d'équilibrage de ce capteur.

L'invention concerne plus précisément les capteurs micro-électromécaniques dits également MEMS pour « microelectromechanical system ». Ces capteurs sont réalisés par gravure collective sur une plaque de matériau de très faible épaisseur : ils sont petits, légers et relativement peu coûteux, ce qui permet leur emploi dans de nombreux domaines d'application, aussi bien dans des produits techniques spécialisés que dans des produits grand public.

Parmi les domaines d'application de ces capteurs figure la mesure inertielle de grandeurs angulaires telles que la position (gyroscopes) et la vitesse (gyromètres).

Les capteurs inertiels angulaires vibrants de type MEMS se classent en deux familles selon la structure du résonateur. Le résonateur peut être un corps déformable, généralement de révolution : anneau, cylindre, hémisphère, disque. Le résonateur peut être également constitué d'un ou plusieurs corps massiques (également appelés couramment masses ou masses d'épreuve) indéformables reliés à un support par des éléments élastiques. Le support est lui rigidement fixé dans un bâti comme dans les documents US-A-2011/0094302 et US-A-2004/0123661. Chaque capteur comprend des actionneurs agencés pour mettre le résonateur déformable ou le système corps massique / éléments élastiques en vibration à la fréquence de résonance du système et des détecteurs des déformations du résonateur déformable ou des mouvements du système corps massique / éléments élastiques sont montés entre le support d'une part le résonateur déformable ou le système corps massique / éléments élastiques d'autre part.

Les performances de tout capteur inertiel vibrant découlent directement de la stabilité de l'anisotropie d'amortissement du résonateur. Cette stabilité est conditionnée par :

- la constante de temps $\tau$ du résonateur (égale à la surtension mécanique Q divisée par $\pi$ et par la fréquence f soit $\tau = Q / (\pi.f)$, dont dépend la quantité d'énergie qu'il sera nécessaire de dépenser pour maintenir le résonateur en résonance,
- l'équilibrage dynamique du résonateur pour, d'une part, limiter les pertes d'énergie vers l'extérieur du capteur et, d'autre part, limiter les perturbations de la vibration du résonateur par l'environnement vibratoire du capteur à la fréquence de fonctionnement.

Dans le domaine des capteurs vibrants de type MEMS constitué d'un ou plusieurs corps massiques indéformables, ceci se traduit par :

- l'utilisation du silicium comme matériau pour obtenir une surtension relativement élevée,
- la présence d'au moins deux corps massiques montés symétriquement de telle manière que les corps massiques se déplacent en opposition de phase en procurant ainsi un équilibrage au premier ordre.

Les capteurs inertiels angulaires vibrants de type MEMS les plus performants comptent ainsi quatre corps massiques disposés selon un motif carré.

L'amélioration des performances de ces capteurs est toutefois limitée par les défauts de réalisation des capteurs.

Ces défauts de réalisation engendrent un balourd dynamique résultant du déplacement du centre de gravité global des corps massiques à la fréquence de vibration. Ce balourd dynamique provoque des forces de réaction dans le support et le bâti, et donc une perte d'énergie de la vibration. Ceci est d'autant plus gênant que la petite taille des capteurs augmente l'impact des défauts de réalisation sur la précision des mesures. En effet, pour les MEMS, le ratio [défaut de réalisation / dimensions caractéristiques] est dégradé par rapport à un capteur macroscopique. Cela conduit à un balourd dynamique plus élevé relativement à la masse du résonateur.

La faible masse du résonateur a comme conséquence qu'elle rend difficile la mesure des défauts d'équilibrage dynamique car les efforts engendrés par le balourd sont trop faibles pour qu'on puisse les mesurer. En outre, quand bien même on parvenait à effectuer cette mesure, il serait difficile de corriger le balourd par un enlèvement de matière localisé en raison de la petite taille du capteur. Une telle correction par enlèvement de matière présenterait en outre l'inconvénient qu'elle ne permettrait pas de compenser l'évolution du balourd en fonction de la température et du temps.

Il est préconisé de fixer rigidement un résonateur non équilibré sur une masse de recul importante au détriment de la sensibilité aux vibrations et de la tenue mécanique.

Dans le cas des résonateurs à plusieurs corps massiques, il en résulte en outre une indépendance des corps massiques. Le couplage mécanique permettant une compensation au premier ordre des déplacements des corps massiques est alors assuré par des leviers reliant les corps massiques entre eux pour leur imposer un déplacement en opposition de phase. La réalisation du capteur est alors complexe et coûteuse. L'équilibrage est en outre rendu difficile par la multiplication des degrés de liberté résultant du nombre de corps massiques et du nombre de leviers de couplage entre les corps massiques qui entraînent une influence sur les autres corps massiques de toute correction d'équilibrage effectuée sur un des corps massiques. Pour les mêmes raisons, un équilibrage électronique au moyen d'un algorithme de correction est complexe à réaliser.

Il est connu du document US-A-2011/094302 un capteur comprenant plusieurs corps sismiques reliés à plusieurs supports par des moyens de suspension autorisant un déplacement des corps sismiques dans une seule direction d'un plan de suspension.

Il est en outre connu du document US-A-2004/123661 un capteur comprenant une masse esclave surspendue dans une masse maître et pourvue de détecteurs de mouvement montés entre la masse esclave et un bâti.

L'invention a pour objet de fournir un moyen pour améliorer la précision des capteurs inertiels angulaires vibrants de type MEMS.

A cet effet, on prévoit, selon l'invention, un capteur angulaire inertiel vibrant de type MEMS comprenant un support d'au moins deux corps massiques, montés concentriquement l'un autour de l'autre et sensiblement de même masse, qui sont montés mobiles par rapport au support et qui sont associés à au moins un actionneur électrostatique et à au moins un détecteur électrostatique. Le capteur comprend des premiers moyens de suspension des corps massiques par rapport au support et des moyens de couplage des corps massiques entre eux et le support est relié par des deuxièmes moyens de suspension à un bâti fixe de sorte que les corps massiques et le support sont mobiles par rapport au bâti fixe parallèlement à un plan de suspension, les moyens de suspension étant isotropes selon le plan de suspension.

Ainsi, les corps massiques sont doublement suspendus par rapport au bâti fixe tout en étant mécaniquement couplés entre eux. Cette double suspension isole mécaniquement les corps massiques vis-à-vis des déformations et des vibrations engendrées par le bâti et limite les échanges d'énergie entre les corps massiques et l'extérieur du bâti. Ceci améliore les performances du capteur. Le support sert de plateforme mobile pour les corps massiques, les moyens de couplage et les moyens de suspensions y associés tout en formant un étage de suspension. L'actionneur et le détecteur sont de préférence montés chacun entre un des corps massiques et le support de sorte que le support sert ici aussi de plateforme mobile pour l'actionneur et le détecteur.

Selon un premier mode de réalisation, les premiers moyens de suspension comprennent un cadre auquel les corps massiques sont reliés par des troisièmes moyens de suspension pour réaliser un couplage massique des corps massiques entre eux, et le cadre est lui-même relié par des quatrièmes moyens de suspension au support.

Ainsi, le couplage mécanique direct entre les corps massiques n'est pas assuré par des leviers dont on a vu qu'ils compliquaient la fabrication et l'équilibrage du capteur. En effet, le couplage mécanique entre les corps massiques est assuré dans ce mode de réalisation par le cadre suspendu, ce qui simplifie la structure du capteur et son équilibrage.

Selon un deuxième mode de réalisation, les moyens de couplage comprennent des cinquièmes moyens de suspension reliant les corps massiques l'un à l'autre pour réaliser un couplage élastique des corps massiques entre eux.

Ainsi, ici aussi le couplage mécanique direct par des leviers entre les corps massiques est supprimé. En effet, le couplage mécanique entre les corps massiques est assuré dans ce mode de réalisation par les cinquièmes moyens de suspension, ce qui simplifie la structure du capteur.

De préférence, au moins un détecteur d'effet de balourd est monté entre le support et le bâti fixe et au moins un ressort électrostatique est placé entre le support et l'un des corps massiques et est asservi pour assurer un équilibrage dynamique du capteur en fonction d'un signal de mesure du détecteur d'effet de balourd.

L'équilibrage peut être obtenu avec cette structure en mesurant l'anisotropie (ou écart) de fréquence entre les deux systèmes corps massique/suspension et en supprimant cette anisotropie. La mesure de l'anisotropie peut être effectuée de manière indirecte en mesurant l'effet du balourd créé par l'anisotropie de fréquence. La correction d'équilibrage est effectuée de préférence en commandant le ressort électrostatique pour ajouter une raideur électrostatique négative à la raideur du système corps massique/suspension possédant la fréquence la plus élevée de manière à corriger l'écart intrinsèque de pulsation dû aux défauts de réalisation et aux évolutions temporelles et thermiques des paramètres de chacun des systèmes corps massique/suspension. Le réglage, basé sur un asservissement de zéro, ne nécessite pas de référence de tension précise ou de gains stables au niveau de l'électronique de traitement du capteur.

L'invention a également pour objet un procédé d'équilibrage de ce capteur.

D'autres caractéristiques et avantages de l'invention ressortiront à la lecture de la description qui suit de modes de réalisation particuliers non limitatifs de l'invention.

Il sera fait référence aux dessins annexés, parmi lesquels :

* les figures 1 à 3 sont utilisées pour expliquer le principe de l'invention, à savoir

- la figure 1 est une vue schématique d'un capteur simplifié mettant en œuvre une partie des moyens de l'invention,
- la figure 2 est une vue schématique illustrant le principe de fonctionnement de ce capteur,
- la figure 3 est une vue schématique d'un mode de réalisation d'une unité de commande de ce capteur,

* les figures 4 à 6 sont utilisées pour décrire les modes de réalisation de l'invention, à savoir

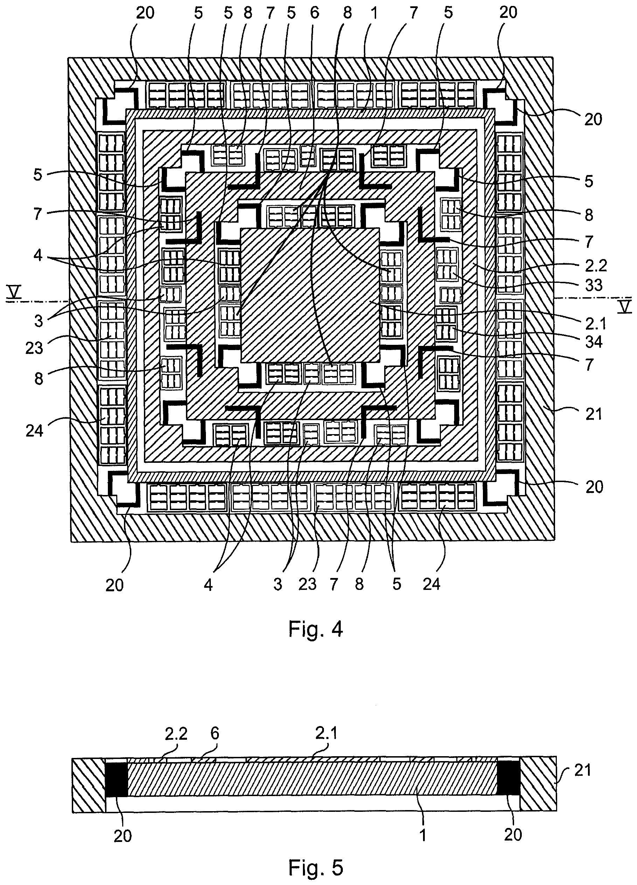

- la figure 4 est une vue schématique d'un premier mode de réalisation du capteur de l'invention,
- la figure 5 est une vue de ce capteur en coupe selon la ligne V-V de la figure 4,

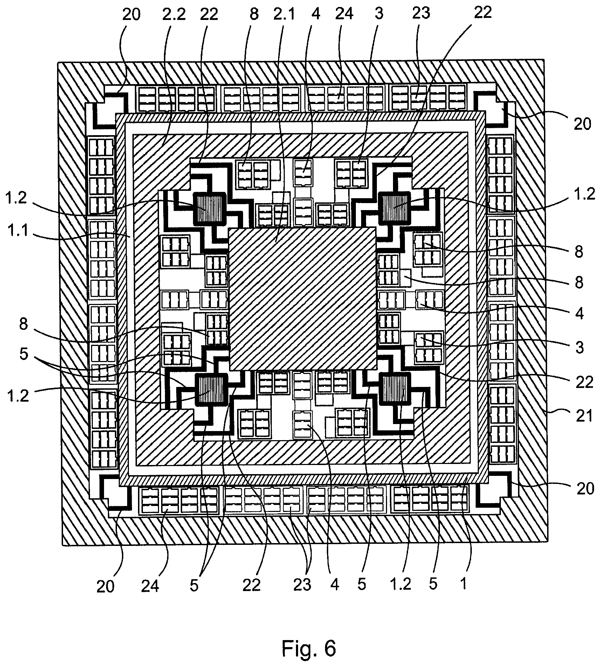

- la figure 6 est une vue schématique d'un deuxième mode de réalisation du capteur de l'invention.

En référence aux figures, l'invention concerne un capteur angulaire inertiel vibrant de type MEMS destiné à former un gyroscope ou un gyromètre.

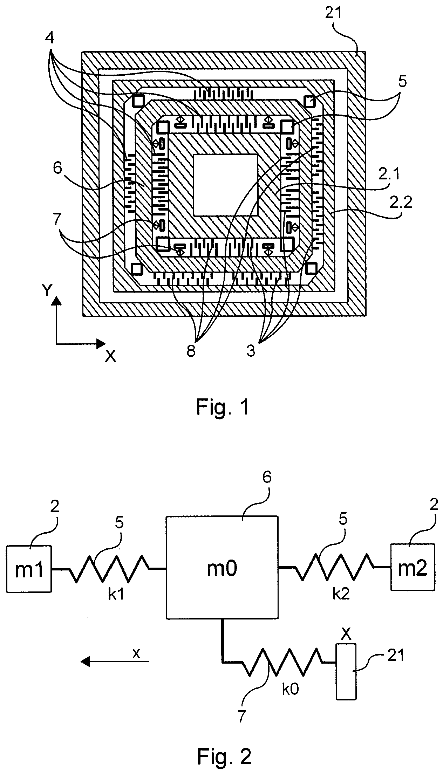

Le principe de l'invention va maintenant être expliqué au regard des figures 1 à 3.

Le capteur simplifié illustré sur ces figures comprend un bâti 21 et au moins deux corps massiques 2 qui sont montés mobiles par rapport au bâti 21 et qui sont associées à des actionneurs électrostatiques 3 et à des détecteurs électrostatiques 4.

Pour ce capteur simplifié, le support qui sert de plateforme pour les corps massiques et les moyens de suspensions y associés, tout en formant un étage de suspension, assure également la fonction de cadre de couplage massique des corps massiques. L'actionneur et le détecteur sont montés chacun entre un des corps massiques et ce cadre de sorte que le cadre de couplage sert ici aussi de plateforme pour l'actionneur et le détecteur à la place du support.

Les corps massiques 2 sont suspendus via des moyens de suspension 5 dans un cadre 6 lui-même relié au bâti 21 par des moyens de suspension 7. Les moyens de suspension 5 et 7 sont isotropes dans le plan XY définissant le plan de suspension des corps massiques du capteur et sont réalisés pour présenter une importante raideur selon l'axe normal au plan du capteur pour supprimer les degrés de liberté des corps massiques 2 et du cadre 6 hors du plan. Chaque corps massique 2 et le cadre 6 disposent de trois degrés de liberté dans le plan, à savoir deux translations (selon les axes X et Y) et une rotation (autour d'un axe normal à ce plan X et Y).

Pour chacun des axes X et Y, un actionneur 3 et un détecteur 4 sont montés entre chacun des corps massiques 2 et le cadre 6. Les actionneurs 3 et les détecteurs 4 ont une structure connue sous la forme d'électrodes en peignes dont les dents sont intercalées les unes entre les autres. Les peignes des actionneurs 3 et des détecteurs 4 peuvent avoir un mode de fonctionnement à entrefer variable ou à surface variable.

Les corps massiques 2 ont des masses identiques et ont une forme générale carrée sur les côtés de laquelle sont disposés les actionneurs 3 et les détecteurs 4. Les moyens de suspension 5 sont disposés aux sommets de chaque corps massique 2. Les corps massiques 2.1, 2.2 sont au nombre de deux et sont agencés pour pouvoir être montés concentriquement. Plus précisément, le cadre 6 est de forme carrée et les corps massiques 2.1, 2.2, en forme de cadres de contour carré sont placés de part et d'autre du cadre 6. Les corps massiques 2.1, 2.2 ont des axes de symétrie confondus possédant des fréquences propres identiques.

Deux ressorts électrostatiques 8 sont montés entre le cadre 6 et chacun des corps massiques 2 de manière à agir respectivement selon les axes X et Y. Les ressorts électrostatiques 8 ont une structure connue sous la forme d'électrodes en peignes dont les dents sont intercalées les unes entre les autres. Les peignes des ressorts électrostatiques 8 ont un mode de fonctionnement à entrefer variable.

Des détecteurs d'effet de balourd, ici plus particulièrement des capteurs de force, sont intégrés aux moyens de suspension 7 pour fournir un signal de mesure représentatif des efforts transmis au bâti 21 par le cadre 6. Ces capteurs sont connus en eux-mêmes et peuvent être des jauges de contraintes piézorésistives ou piézoélectriques.

La fabrication du capteur de l'invention est réalisée à partir des techniques classiques de gravure des plaques de matériau semi-conducteur. Le matériau semi-conducteur ici utilisé est le silicium.

Les actionneurs 3 et les détecteurs 4 sont reliés, par des conducteurs électriques connus en eux-mêmes, à une unité de commande 9, elle aussi connue en elle-même, qui est programmée pour commander les actionneurs 3 et traiter les signaux des détecteurs 4 de manière à assurer la détection de grandeur angulaire autour d'un axe normal au plan de déplacement des corps massiques 2.

Le ressort électrostatique 8 et les capteurs de force intégrés aux moyens de suspension 7 sont eux aussi reliés à l'unité de commande 9 qui est programmée pour asservir les ressorts électrostatiques 8 en fonction des signaux desdits capteurs de force démodulés en fonction de la fréquence de vibration des corps massiques 2 pour supprimer le balourd à la fréquence de vibration de manière à assurer un équilibrage du capteur.

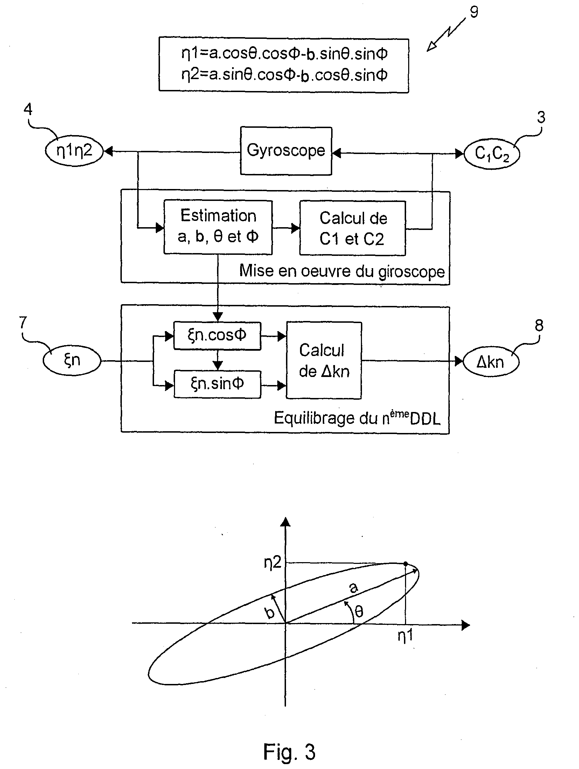

Le fonctionnement de l'unité de commande 9 est représenté sur la figure 3 dans la détermination de la variation de raideur $\Delta kn$ pour l'équilibrage du capteur selon un degré de liberté « n ». Il y est symbolisé une vibration elliptique de grande dimension « a » et de petite dimension « b ». Le grand axe de la vibration forme un angle $\theta$ dans un repère XY. La mise en œuvre du gyroscope conduit à la détermination des commandes C1 et C2 des actionneurs 3 en fonction des mouvements $\eta1$, $\eta2$ détectés par les capteurs 4. Sachant que les valeurs $\eta1 = a.\cos\theta\cos\varphi + b.\sin\theta\sin\varphi$ et $\eta2= a.\sin\theta\sin\varphi + b.\cos\theta\cos\varphi$, on en déduit une estimation de a, b, $\theta$ et $\varphi$. Connaissant les efforts $\xi n$ détectés par les capteurs 7, l'unité de commande calcule les valeurs $\xi n.\cos\varphi$ et $\xi n.\sin\varphi$ pour arriver à la variation de raideur $\Delta kn$ servant de consigne pour piloter les ressorts électrostatiques 8.

On rappelle qu'ici les masses $(m_1, m_2)$ des corps massiques 2.1, 2.2 sont identiques et les moyens de suspension des corps massiques 2.1, 2.2 ont des raideurs identiques $(k_1, k_2)$. Ceci permet de respecter les hypothèses des équations de modélisation dynamique présentées ci-dessous.

En référence plus particulièrement à la figure 2, le capteur est assimilable à deux systèmes masse/ressort ($m_1$, $k_1$) et ($m_2$, $k_2$) reliés au monde extérieur par un autre système masse/ressort ($m_0$, $k_0$, à savoir la masse du cadre 6 et la raideur des moyens de suspension 7).

Le comportement du capteur est modélisable à partir des données suivantes (on note $\delta m$ et $\delta k$ respectivement un écart de masse et un écart de raideur) :

$$m1 := \mathrm{m} \cdot (1 + \delta m) : m2 := m \cdot (1 - \delta m) :$$
$$k1 := \mathrm{k} \cdot (1 + \delta k) : k2 := k \cdot (1 - \delta k) :$$
$$m0 := \beta \cdot m : k0 := \alpha \cdot k :$$
$$k := \omega^2 \cdot m :$$

La modélisation permet de calculer les fréquences des modes propres, le balourd du mode propre utile et la force de réaction de ce balourd sur le support.

Il en résulte que le balourd est proportionnel à la masse m, au ratio $k_0/k$ noté $\alpha$ et à l'écart de pulsations $\delta\omega$ des deux systèmes masses ressorts. Le balourd du mode utile vaut ainsi :

$$balourd = 2\,m\,\alpha\,\delta\omega$$

L'effort transmis au monde extérieur peut s'exprimer de manière similaire :

$$effort = 2\,k\,\alpha\,\delta\omega$$

Il apparaît des formules précédentes qu'un équilibrage du capteur peut être réalisé, conformément à l'invention, à partir des étapes suivantes :

- mesurer une anisotropie de fréquence entre les masses, l'étape de mesure étant réalisée en mesurant l'effort appliqué par le cadre au bâti du fait du balourd du capteur résultant de défauts de réalisation,
- corriger l'anisotropie de fréquence entre les masses.

L'étape de correction est réalisée en commandant les ressorts électrostatiques 8 de manière à réduire cet effet : un asservissement exploitant la démodulation par rapport à la fréquence de la vibration des signaux des capteurs de force incorporés aux moyens de suspension 7 corrige les raideurs des ressorts électrostatiques 8 placés entre les corps massiques 2 et le cadre 6 pour supprimer le balourd à la fréquence de la vibration.

La correction s'effectue ici plus précisément en ajoutant une raideur électrostatique négative à la raideur du système masse/ressort possédant la fréquence la plus élevée pour corriger l'écart intrinsèque de pulsation dû aux défauts de réalisation et aux évolutions temporelles et thermiques des paramètres de chacun des systèmes masse/ressort.

On notera que l'agencement du capteur permet d'obtenir deux modes propres selon l'axe X, à savoir masses $m_1$ et $m_2$ se déplaçant en phase et masses $m_1$ et $m_2$ se déplaçant en opposition de phase, avec un déplacement faible de la masse $m_0$, qui n'ont pas les mêmes fréquences. L'écart de fréquence est par exemple de l'ordre de 10 % si $m_0 = 10 \ast m_{1/2}$ ou 25 % si $m_0 = 4 \ast m_{1/2}$. Ceci confirme la possibilité de simplifier la structure, en n'utilisant pas de leviers de couplage mécanique entre les masses, sans risque d'accrochage entre les deux modes propres lors du fonctionnement.

Il est ainsi possible de fabriquer un gyromètre boucle fermée à deux corps massiques vibrants avec un asservissement à 0 du mouvement sur la voie Coriolis Y. Ceci permet d'utiliser un mode propre non équilibré au premier ordre pour cette voie.

Dans les modes de réalisation de l'invention qui vont maintenant être décrits, le support est relié à un bâti par des moyens de suspension.

Dans ces modes de réalisation, on prévoit deux types de couplage entre les corps massiques :

- un couplage par masse, dans lequel les deux corps massiques sont fixés par des ressorts sur une masse de couplage (le cadre) suspendue par rapport au support,
- un couplage par ressort, dans lequel les deux corps massiques sont suspendues par rapport au support et sont directement reliés l'un à l'autre par des ressorts de couplage (ou suspension).

On définit un coefficient de couplage comme le rapport entre la fréquence du mode de translation en phase des corps massiques et la fréquence du mode de translation en opposition de phase des corps massiques :

- a = 1 : pas de couplage,
- a = 0 : couplage total.

Dans le cas du couplage par masse, le coefficient de couplage dépend du ratio (masse des corps massiques 2 / masse du cadre),

Dans le cas du couplage par ressort, le coefficient de couplage dépend du ratio (raideur du ressort entre les corps massiques / raideur des ressorts entre les corps massiques et le support).

Le couplage est minimal lorsque le coefficient tend vers 1, c'est-à-dire lorsque la masse du cadre est élevée ou lorsque la raideur des ressorts entre les corps massiques est faible et est d'autant plus fort que le coefficient de couplage est proche de 0, c'est-à-dire lorsque la masse du cadre est faible ou lorsque la raideur des ressorts entre les corps massiques est élevée.

En référence aux figures 4 à 6, le capteur selon les modes de réalisation de l'invention comprend un support 1 et au moins deux corps massiques 2 qui sont montés mobiles par rapport au support 1 et qui sont associés à des actionneurs électrostatiques 3 et à des détecteurs électrostatiques 4. Les corps massiques 2.1, 2.2 sont au nombre de deux et sont agencés pour pouvoir être montés concentriquement.

Les corps massiques 2.1, 2.2 ont donc respectivement une forme carrée et une forme de cadre d'axes de symétrie confondus possédant des fréquences propres identiques.

Le capteur comprend des premiers moyens de suspension des corps massiques 2.1, 2.2 au support 1 et des moyens de couplage des corps massiques 2.1, 2.2 entre eux.

Les masses des corps massiques 2.1, 2.2 sont identiques et les moyens de suspension des corps massiques 2.1, 2.2 ont des raideurs identiques. Ceci permet de respecter les hypothèses des équations de modélisation dynamique présentées plus haut.

En référence plus particulièrement aux figures 4 et 5, selon le premier mode de réalisation perfectionnée, les corps massiques 2.1, 2.2 sont placés de part et d'autre d'un cadre 6 de forme carrée.

Les corps massiques 2.1, 2.2 sont suspendus via des moyens de suspension 5 au cadre 6 lui-même relié au support 1 par des moyens de suspension 7. Les moyens de suspension 5 et 7 sont isotropes dans le plan XY définissant le plan de suspension des corps massiques 2.1, 2.2 du capteur et sont réalisés pour présenter une importante raideur selon l'axe normal au plan du capteur pour supprimer les degrés de liberté des corps massiques 2.1, 2.2 et du cadre 6 hors du plan. Chaque corps massique 2.1, 2.2 et le cadre 6 disposent de trois degrés de liberté dans le plan, à savoir deux translations (selon les axes X et Y) et une rotation (autour d'un axe normal à ce plan X et Y).

Le cadre 6 ainsi relié aux corps massiques 2.1, 2.2 par les moyens de suspension réalise un couplage massique des corps massiques 2.1 et 2.2 entre eux. Le cadre 6 est ici relativement léger par rapport aux corps massiques de sorte que le couplage est fort (coefficient de couplage par exemple compris entre 0,2 et 0,4, de préférence 0,3). Un couplage fort présente l'avantage d'éloigner de la fréquence du mode utile de vibration des corps massiques (les corps massiques vibrent en opposition de phase dans le plan de suspension selon une direction d'orientation quelconque par rapport au support 1) la fréquence du mode parasite de vibration (les corps massiques vibrent en phase) qui se rapproche alors de la fréquence du mode de suspension (mode d'ensemble du support 1 et des corps massiques 2). Le couplage fort permet d'avoir une forte surtension limitant les dissipations d'énergie du mode utile.

Pour chacun des axes X et Y, un actionneur 3 et un détecteur 4 sont montés entre chacun des corps massiques 2 et le support 1. Les actionneurs 3 et les détecteurs 4 ont une structure connue sous la forme d'électrodes en peignes dont les dents sont intercalées les unes entre les autres. Des peignes sont ainsi fixés aux corps massiques 2 et des peignes sont fixés au support 1. Les peignes des actionneurs 3 et des détecteurs 4 peuvent avoir un mode de fonctionnement à entrefer variable ou à surface variable. Les actionneurs 3 et les détecteurs 4 sont disposés sur les côtés des corps massiques 2.1, 2.2 et les moyens de suspension 5 sont disposés aux sommets de chaque corps massique 2.1, 2.2.

Quatre ressorts électrostatiques 8 sont montés entre le support 1 et chacun des corps massiques 2.1, 2.2 de manière à agir respectivement selon les axes X et Y. Les ressorts électrostatiques 8 ont une structure connue sous la forme d'électrodes en peignes dont les dents sont intercalées les unes entre les autres. Des peignes sont ainsi fixés aux corps massiques 2 et des peignes sont fixés au support 1. Les peignes des ressorts électrostatiques 8 ont un mode de fonctionnement à entrefer variable.

Le support 1, sous la forme d'une plateforme bordé d'un rebord, est relié par des deuxièmes moyens de suspension 20 à un bâti fixe 21. Les moyens de suspension 20 sont conçus comme les moyens de suspension 5 et 7 et sont montés sur les sommets du support 1. Les moyens de suspension 20 sont isotropes dans le plan XY définissant le plan de suspension des corps massiques 2.1, 2.2 du capteur et sont réalisés pour présenter une importante raideur selon l'axe normal au plan du capteur pour supprimer les degrés de libertés du support 1 hors du plan. Le support 1 dispose de trois degrés de liberté dans le plan, à savoir deux translations (selon les axes X et Y) et une rotation (autour d'un axe normal à ce plan X et Y).

Pour chacun des axes X et Y, des actionneurs 23 et des détecteurs d'effets de balourd 24 sont montés entre le bâti 21 et le support 1. Les actionneurs 23 et les détecteurs 24 ont une structure connue sous la forme d'électrodes en peignes dont les dents sont intercalées les unes entre les autres. Des peignes sont ainsi fixés au bâti 21 et des peignes sont fixés au support 1. Les peignes des actionneurs 23 et des détecteurs 24 peuvent avoir un mode de fonctionnement à entrefer variable ou à surface variable. Les actionneurs 23 et les détecteurs 24 sont disposés sur les côtés du bâti 21 et du support 1.

En variante, des détecteurs d'effet de balourd, ici plus particulièrement des capteurs de force, sont intégrés aux moyens de suspension 20 pour fournir un signal de mesure représentatif des efforts transmis au bâti 21 par le support 1. Ces capteurs sont connus en eux-mêmes et peuvent être des jauges de contraintes piézorésistives ou piézoélectriques.

La fabrication du capteur de l'invention est réalisée à partir des techniques classiques de gravure des plaques de matériau semi-conducteur (gravure de type DRIE sur galette de silicium de type SOI par exemple). Le matériau semi-conducteur ici utilisé est le silicium.

Les actionneurs 3 et les détecteurs 4 sont reliés, par des conducteurs électriques connus en eux-mêmes, à l'unité de commande, elle aussi connue en elle-même, qui est programmée pour commander les actionneurs 3 et traiter les signaux des détecteurs 4 de manière à assurer la détection de grandeur angulaire autour d'un axe normal au plan de déplacement des corps massiques 2.1, 2.2.

Les ressorts électrostatiques 8 et les détecteurs d'effets de balourd 24 fournissant un signal de mesure représentatif des efforts transmis au bâti 21 par le support 1 sont eux aussi reliés à l'unité de commande qui est programmée pour asservir les ressorts électrostatiques 8 en fonction des signaux desdits détecteurs 24 démodulés en fonction de la fréquence de vibration des corps massiques 2.1, 2.2 pour supprimer le balourd à la fréquence de vibration de manière à assurer un équilibrage du capteur. Le pilotage des ressorts électrostatiques 8 permet ainsi de régler les raideurs élémentaires de chacun des corps massiques 2, à savoir : les raideurs participant à un même mode propre pour annuler le balourd de ce mode propre et la raideur moyenne de chacun des deux modes propres pour annuler le défaut de quadrature ou anisofréquence rencontré classiquement. Ce pilotage est effectué en vue d'obtenir quatre fréquences élémentaires de vibration (une fréquence élémentaire par axe pour chaque corps massique 2) qui sont égales les unes aux autres.

Les actionneurs 23 et les détecteurs 24 sont reliés à l'unité de commande qui est programmée pour commander les actionneurs 23 en fonction des signaux desdits détecteurs 24 pour réaliser un amortissement actif, connu en lui-même, de la suspension 20 du support 1.

Il n'y a pas d'électrodes entre le cadre 6 et les corps massiques 2.1 et 2.2, ce qui permet de simplifier la fabrication du capteur. Le cadre 6 n'assure donc qu'une fonction de couplage tandis que le support 1 assure lui en outre une fonction de porte-électrodes pour les corps massiques 2.1 et 2.2.

En référence à la figure 6, selon le deuxième mode de réalisation, le support 1 comprend une plateforme 1.1 et des plots 1.2 s'étendant en saillie de la plateforme 1.1 entre les corps massiques 2.1, 2.2. Les corps massiques 2.1, 2.2 sont reliés aux plots 1.2 par les moyens de suspension 5.

Des moyens de suspension 22 reliant les corps massiques 2.1, 2.2 l'un à l'autre constituent des moyens de couplage élastique des corps massiques 2.1, 2.2 entre eux. Les moyens de suspension 22 ont de préférence une raideur supérieure à la raideur des moyens de suspension 5 de sorte que le couplage est fort (coefficient de couplage par exemple compris entre 0,2 et 0,4, de préférence 0,3). Comme indiqué précédemment, un couplage fort présente l'avantage d'éloigner de la fréquence du mode utile de vibration des corps massiques (les corps massiques vibrent en opposition de phase selon une orientation quelconque par rapport au support 1) la fréquence du mode parasite de vibration (les corps massiques vibrent en phase) qui se rapproche alors de la fréquence du mode de suspension (mode d'ensemble du support 1 et des corps massiques 2). Le couplage fort permet d'avoir une forte surtension limitant les dissipations d'énergie du mode utile.

Comme précédemment, le support 1 est relié par des moyens de suspension 20 au bâti fixe 21.

Des actionneurs 23 sont montés entre le bâti 21 et le support 1. Des détecteurs d'effet de balourd 24 sont montés entre le bâti 21 et le support 1 pour fournir un signal de mesure représentatif des efforts transmis au bâti 21 par le support 1.

Les actionneurs 3, 23, les détecteurs 4, 24 et les ressorts électrostatiques 8 sont reliés, par des conducteurs électriques connus en eux-mêmes, à l'unité de commande comme dans le premier mode de réalisation.

Le procédé de commande et le fonctionnement des modes de réalisation perfectionnés sont analogues à ceux exposés en relation avec les modes de réalisation des figures 1 à 5.

Bien entendu, l'invention n'est pas limitée aux modes de réalisation décrits mais englobe toute variante entrant dans le champ de l'invention telle que définie par les revendications.

Il est possible d'avoir des ressorts électrostatiques asservis sur tous les corps massiques 2 ou sur tous les corps massiques 2 sauf un.

L'effet du balourd mesuré peut être un effort appliqué par le support 1 au bâti 21, une accélération du support 1 par rapport au bâti 21, une vitesse du support 1 par rapport au bâti 21, un déplacement du support 1 par rapport au bâti 21 ou autre.

Le capteur peut avoir une forme différente de celle décrite. Les corps massiques et le cadre peuvent avoir, dans le plan du capteur, des formes polygonales ou au moins partiellement courbes, pouvant être décrites par quatre rotations de 90° d'un motif représentant un quart de la géométrie.

Au moins un actionneur électrostatique 33 et au moins un détecteur 34 électrostatique peuvent être placés entre le cadre 6 et le support 1 pour réaliser un amortissement actif, connu en lui-même, de la suspension 7 du cadre 6.

L'invention concerne également un capteur dont les corps massiques seraient suspendus sur un support et posséderaient un couplage fort par masse ou ressort et qui serait dépourvu des moyens d'équilibrage actifs décrits en relation avec le mode de réalisation représenté aux figures. En fonction de la qualité de réalisation et des défauts réels d'anisotropie de raideur, il est envisageable de supprimer les moyens de réglages du balourd, la double suspension limitant l'influence des balourds sur les mesures effectuées.

## Revendications

1. Capteur angulaire inertiel vibrant de type MEMS comprenant un support (1) d'au moins deux corps massiques (2), montés concentriquement l'un autour de l'autre, qui sont montés mobiles par rapport au support et qui sont associés à au moins un actionneur électrostatique (3) et à au moins un détecteur électrostatique (4), le capteur comprenant des premiers moyens de suspension (5) des corps massiques par rapport au support et des moyens de couplage des corps massiques entre eux et le support étant relié par des deuxièmes moyens de suspension (7) à un bâti fixe (21) de sorte que les corps massiques et le support sont mobiles par rapport au bâti fixe parallèlement à un plan de suspension, **caractérisé en ce que** les au moins deux corps massiques (2) sont sensiblement de même masse et **en ce que** les moyens de suspension (5, 7) sont isotropes selon le plan de suspension.

2. Capteurs selon la revendication 1, dans lequel les moyens de couplage sont agencés pour assurer un couplage relativement fort, c'est-à-dire avec un coefficient de couplage compris entre 0,2 et 0,4.

3. Capteurs selon la revendication 1, dans lequel les premiers moyens de suspension comprennent un cadre (6) auquel les corps massiques sont reliées par des troisièmes moyens de suspension pour réaliser un couplage massique des corps massiques entre eux et qui est lui-même relié par des quatrièmes moyens de suspension au support.

4. Capteur selon la revendication 1, dans lequel les moyens de couplage comprennent des cinquièmes moyens de suspension reliant les corps massiques l'un à l'autre pour réaliser un couplage élastique des corps massiques entre eux.

5. Capteur selon la revendication 1, dans lequel un cadre (6) est monté entre les corps massiques et relié aux corps massiques par des troisièmes moyens de suspensions pour réaliser un couplage massique des corps massiques entre eux, le cadre étant lui-même relié par des quatrième moyens de suspension au support ; le cadre, les troisièmes moyens de suspension et les quatrièmes moyens de suspension formant les premiers moyens de suspension ; le cadre et les troisième moyens de suspension formant les moyens de couplage.

6. Capteur selon la revendication 5, dans lequel le bâti (21) s'étend autour du support (1) et les deuxièmes moyens de suspension relient une périphérie du support au bâti.

7. Capteur selon la revendication 1, dans lequel le support comprend une plateforme et des plots en saillie de la plateforme entre les corps massiques, les corps massiques étant reliées aux plots par les premiers moyens de suspension et les moyens de couplage comprennent des moyens de suspension reliant les corps massiques l'un à l'autre.

8. Capteur selon la revendication 7, dans lequel le bâti (21) s'étend autour du support (1) et les deuxièmes moyens de suspension relient une périphérie du support (1) au bâti (21).

9. Capteur selon l'une quelconque des revendications précédentes, dans lequel au moins un détecteur d'effet de balourd (24) est monté entre le support et le bâti fixe et au moins un ressort électrostatique (8) est placé entre le support et l'un des corps massiques et est asservi pour assurer un équilibrage dynamique du capteur en fonction d'un signal de mesure du détecteur d'effet de balourd.

10. Capteur selon l'une quelconque des revendications précédentes, dans lequel l'actionneur électrostatique (3) et le détecteur électrostatique (4) sont montés chacun entre un des corps massiques et le support.

11. Procédé d'équilibrage d'un capteur selon la revendication 9, comprenant les étapes de mesurer et de corriger une anisotropie de fréquence entre les corps massiques (2) due à des défauts de réalisation, l'étape de mesure étant réalisée en mesurant un effet produit par un balourd du capteur résultant de l'anisotropie de fréquence et l'étape de correction étant réalisée en asservissant la commande du ressort électrostatique (8) de manière à réduire cet effet.

12. Procédé selon la revendication 11, dans lequel l'effet du balourd mesuré est un effort appliqué par le support (1) au bâti.

13. Procédé selon la revendication 11, dans lequel l'effet du balourd mesuré est une accélération du support (1) par rapport au bâti.

14. Procédé selon la revendication 11, dans lequel l'effet du balourd mesuré est une vitesse du support (1) par rapport au bâti.

15. Procédé selon la revendication 11, dans lequel l'effet du balourd mesuré est un déplacement du support (1) par rapport au bâti.

## Patentansprüche

1. Vibrierender MEMS-Trägheitswinkelsensor, umfassend einen Träger (1) für mindestens zwei konzentrisch umeinander montierte Massekörper (2), die in Bezug auf den Träger beweglich gelagert und mit mindestens einem elektrostatischen Aktor (3) und mit mindestens einem elektrostatischen Detektor (4) verbunden sind, wobei der Sensor erste Aufhängungsmittel (5) zur Aufhängung der Massekörper in Bezug auf den Träger und Kopplungsmittel zur Kopplung der Massekörper miteinander umfasst und der Träger über zweite Aufhängungsmittel (7) derart mit einem ortsfesten Gestell (21) verbunden ist, dass die Massekörper und der Träger in Bezug auf das ortsfeste Gestell parallel zu einer Aufhängungsebene beweglich sind, **dadurch gekennzeichnet, dass** die mindestens zwei Massekörper (2) im Wesentlichen die gleiche Masse haben und dass die Aufhängungsmittel (5, 7) in der Aufhängungsebene isotrop sind.

2. Sensor nach Anspruch 1, bei dem die Kopplungsmittel so ausgebildet sind, dass sie eine relativ starke Kopplung gewährleisten, d.h. mit einem Kopplungskoeffizienten zwischen 0,2 und 0,4.

3. Sensor nach Anspruch 1, bei dem die ersten Aufhängungsmittel einen Rahmen (6) umfassen, mit dem die Massekörper über dritte Aufhängungsmittel verbunden sind, um eine Massekopplung der Massekörper miteinander zu erzeugen, und der selbst über vierte Aufhängungsmittel mit dem Träger verbunden ist.

4. Sensor nach Anspruch 1, bei dem die Kopplungsmittel fünfte Aufhängungsmittel umfassen, die die Massekörper miteinander verbinden, um eine elastische Kopplung der Massekörper miteinander zu erzeugen.

5. Sensor nach Anspruch 1, bei dem ein Rahmen (6) zwischen den Massekörpern montiert und mit den Massekörpern über dritte Aufhängungsmittel verbunden ist, um eine Massekopplung der Massekörper miteinander zu erzeugen, wobei der Rahmen selbst über vierte Aufhängungsmittel mit dem Träger verbunden ist; wobei der Rahmen, die dritten Aufhängungsmittel und die vierten Aufhängungsmittel die ersten Aufhängungsmittel bilden; wobei der Rahmen und die dritten Aufhängungsmittel die Kopplungsmittel bilden.

6. Sensor nach Anspruch 5, bei dem sich das Gestell (21) um den Träger (1) herum erstreckt und die zweiten Aufhängungsmittel einen Umfang des Trägers mit dem Gestell verbinden.

7. Sensor nach Anspruch 1, bei dem der Träger eine Plattform und von der Plattform zwischen den Massekörpern vorstehende Kontaktstücke umfasst, wobei die Massekörper mit den Kontaktstücken über die ersten Aufhängungsmittel verbunden sind und die Kopplungsmittel Aufhängungsmittel umfassen, die die Massekörper miteinander verbinden.

8. Sensor nach Anspruch 7, bei dem sich das Gestell (21) um den Träger (1) herum erstreckt und die zweiten Aufhängungsmittel einen Umfang des Trägers (1) mit dem Gestell (21) verbinden.

9. Sensor nach einem der vorhergehenden Ansprüche, bei dem mindestens ein Unwucht-Effekt-Detektor (24) zwischen dem Träger und dem ortsfesten Gestell montiert ist und mindestens eine elektrostatische Feder (8) zwischen dem Träger und einem der Massekörper platziert ist und geregelt wird, um ein dynamisches Gleichgewicht des Sensors in Abhängigkeit von einem Messsignal des Unwucht-Effekt-Detektors zu gewährleisten.

10. Sensor nach einem der vorhergehenden Ansprüche, bei dem der elektrostatische Aktor (3) und der elektrostatische Detektor (4) jeweils zwischen einem der Massekörper und dem Träger montiert sind.

11. Verfahren zum Auswuchten eines Sensors nach Anspruch 9, umfassend die Schritte des Messens und Korrigierens einer Frequenz-Anisotropie zwischen den Massekörpern (2) aufgrund von Herstellungsfehlern, wobei der Schritt des Messens dadurch erfolgt, dass ein Effekt gemessen wird, der von einer Unwucht des Sensors erzeugt wird, die aus der Frequenz-Anisotropie resultiert, und der Korrekturschritt dadurch erfolgt, dass die Steuerung der elektrostatischen Feder (8) geregelt wird, um diesen Effekt zu reduzieren.

12. Verfahren nach Anspruch 11, bei dem der Effekt der gemessenen Unwucht eine Kraft ist, die von dem Träger (1) auf das Gestell aufgebracht wird.

13. Verfahren nach Anspruch 11, bei dem der Effekt der gemessenen Unwucht eine Beschleunigung des Trägers (1) in Bezug auf das Gestell ist.

14. Verfahren nach Anspruch 11, bei dem der Effekt der gemessenen Unwucht eine Geschwindigkeit des Trägers (1) in Bezug auf das Gestell ist.

15. Verfahren nach Anspruch 11, bei dem der Effekt der gemessenen Unwucht eine Verschiebung des Trägers (1) in Bezug auf das Gestell ist.

## Claims

1. A vibrating inertial angular sensor of the MEMS type comprising a substrate (1) for supporting at least two mass bodies (2), mounted concentrically one around the other, which are mounted to be mobile relative to the substrate and which are associated with at least one electrostatic actuator (3) and at least one electrostatic detector (4), the sensor comprising first means for suspending (5) the mass bodies relative to the substrate and means for coupling the mass bodies together, and the substrate being connected to a stationary rack (21) by second suspension means (7), so that the mass bodies and the substrate are mobile relative to the stationary rack parallel to a plane of suspension, **characterized in that** the at least two mass bodies (2) are substantially of the same mass and **in that** the suspension means (5, 7) are isotropic in the plane of suspension.

2. Sensors according to claim 1, wherein the coupling means are so arranged as to provide a relatively strong coupling, that is to say with a coupling coefficient between 0.2 and 0.4.

3. Sensors according to claim 1, wherein the first suspension means comprise a frame (6) which the mass bodies are connected to by third suspension means so as to provide a mass coupling of the mass bodies together and which is itself connected by fourth means for suspending the bodies to the substrate.

4. A sensor according to claim 1, wherein the coupling means comprise fifth suspension means connecting the mass bodies together to provide an elastic coupling of the mass bodies together.

5. A sensor according to claim 1, wherein a frame (6) is mounted between the mass bodies and connected to the mass bodies by third suspension means for providing a mass coupling of the mass bodies together, with the frame being itself connected by fourth means for suspending to the substrate; with the frame, the third suspension means and the fourth suspension means forming the first suspension means; with the frame and the third suspension means forming the coupling means.

6. A sensor according to claim 5, wherein the rack (21) extends around the substrate (1) and the second suspension means connect a periphery of the substrate to the rack.

7. A sensor according to claim 1, wherein the substrate comprises a platform and pads projecting from the platform between the mass bodies, with the mass bodies being connected to the pads by the first suspension means and the coupling means comprise suspension means connecting the mass bodies together.

8. A sensor according to claim 7, wherein the rack (21) extends around the substrate (1) and the second suspension means connect a periphery of the substrate (1) to the rack (21) .

9. A sensor according to any one of the preceding claims, wherein at least one unbalance effect detector (24) is mounted between the substrate and the stationary rack and at least one electrostatic spring (8) is positioned between the substrate and one of the mass bodies and is servo-controlled so as to provide a dynamic balancing of the sensor according to a measurement signal from the unbalance effect detector.

10. A sensor according to any one of the preceding claims, wherein the electrostatic actuator (3) and the electrostatic detector (4) are each mounted between one of the mass bodies and the substrate.

11. A method for balancing a sensor according to claim 9, comprising the steps of measuring and correcting a frequency anisotropy between the mass bodies (2) due to production defects, with the step of measuring being performed by measuring an effect produced by the unbalance of the sensor resulting from the frequency anisotropy and the step of correcting being performed by servo-controlling the electrostatic spring (8) control so as to reduce such effect.

12. A method according to claim 11, wherein the effect of the measured unbalance is a stress applied by the substrate (1) to the rack.

13. A method according to claim 11, wherein the effect of the measured unbalance is an acceleration of the substrate (1) relative to the rack.

14. A method according to claim 11, wherein the effect of the measured unbalance is a speed of the substrate (1) relative to the rack.

15. A method according to claim 11, wherein the effect of the measured unbalance is a motion of the substrate (1) relative to the rack.

Fig. 1

Fig. 2

$$\eta1=a.cos\theta.cos\Phi-b.sin\theta.sin\Phi$$
$$\eta2=a.sin\theta.cos\Phi-b.cos\theta.sin\Phi$$

9

4 — $\eta1\eta2$

Gyroscope

$C_1C_2$ — 3

Estimation a, b, $\theta$ et $\Phi$

Calcul de C1 et C2

Mise en oeuvre du giroscope

7 — $\xi n$

$\xi n.cos\Phi$

$\xi n.sin\Phi$

Calcul de $\Delta kn$

$\Delta kn$ — 8

Equilibrage du $n^{ème}$DDL

$\eta2$

b

a

$\theta$

$\eta1$

Fig. 3

Fig. 4

Fig. 5

Fig. 6

**EP 2 992 298 B1**

## RÉFÉRENCES CITÉES DANS LA DESCRIPTION

**Documents brevets cités dans la description**

- US 20110094302 A
- US 20040123661 A
- US 2011094302 A
- US 2004123661 A